# FASCICULE DE BREVET EUROPEEN

(11) **EP 4 038 482 B1**
(45) Date de publication et mention de la délivrance du brevet: **04.12.2024**
(21) Numéro de dépôt: 20780215.8
(22) Date de dépôt: 30.09.2020
(51) Int. Cl.: G06F 3/0354, G06F 1/3234, G06F 3/041, G06F 3/045, G06F 3/046

(54) **SYSTEME DE RELEVE D'UNE TRACE EFFECTUEE PAR UN USTENSILE SUR UNE SURFACE D'ECRITURE, PROCÉDÉ ET SUPPORT D' ENREGISTREMENT D'INFORMATIONS CORRESPONDANTS**
SYSTEM ZUR ERFASSUNG EINES VON EINEM GERÄT AUF EINER SCHREIBOBERFLÄCHE ZURÜCKGELEGTEN WEGES, UND ENTSPRECHENDES VERFAHREN UND INFORMATIONS-AUFZEICHNUNGSMEDIUM
SYSTEM FOR DETECTING A PATH TRACED BY AN IMPLEMENT ON A WRITING SURFACE, AND CORRESPONDING METHOD AND INFORMATION RECORDING MEDIUM

(30) Priorité: 04.10.2019 FR 1911036
(43) Date de publication de la demande: 10.08.2022
(73) Titulaire: Advanced Magnetic Interaction, AMI, 38170 Seyssinet-Pariset (FR); Commissariat à l'Energie Atomique et aux Energies Alternatives, 75015 Paris (FR)
(72) Inventeur: ALOUI, Saifeddine, 38054 Grenoble Cedex 09 (FR); VIAL, Franck, 38054 Grenoble cedex 09 (FR); BRULAIS, Sébastien, 38054 Grenoble Cedex 09 (FR); PERIS Y SABORIT, Laure, 38054 Grenoble Cedex 09 (FR); DUPRÉ LA TOUR, Jean-Marie, 38400 Saint-Martin-D'Hères (FR); HAUTSON, Tristan, 38400 Saint-Martin-D'Hères (FR); JAILLET-CASILLAS, Myrna, 38400 Saint-Martin-D'Hères (FR); THOMAS, Simon, 38400 Saint-Martin-D'Hères (FR)
(74) Mandataire: Brevalex
(86) Numéro de dépôt international: PCT/EP2020/077402
(87) Numéro de publication internationale: WO 2021/064041

(56) Documents cités:
- WO-A1-2018/219891
- FR-A1- 2 988 872

## Description

### DOMAINE TECHNIQUE

Le domaine de l'invention est celui du relevé d'une trace effectuée sur une surface d'écriture par la pointe d'un ustensile manipulé par un utilisateur. La trace correspond à l'ensemble des positions successives de la pointe lorsqu'elle est au contact de la surface d'écriture.

### ÉTAT DE LA TECHNIQUE ANTÉRIEURE

Les systèmes électroniques de relevé de la trace de la pointe d'un ustensile sur une surface d'écriture, par exemple la pointe d'un stylet, d'un crayon ou autre, permettent notamment de numériser le dessin ou l'écriture réalisée par un utilisateur manipulant l'ustensile.

D'une manière générale, il importe d'être en mesure de détecter avec précision le contact de la pointe de l'ustensile sur la surface d'écriture tout en écartant ou limitant l'impact sur la détection des contacts parasites tels que le contact du doigt ou celui de la paume de la main de l'utilisateur. A ce titre, le document EP2811383A1 décrit un exemple de système de relevé de la trace d'un ustensile sur un support d'écriture au moyen d'un réseau de magnétomètres qui permettent de suivre la position d'au moins un aimant fixé à l'ustensile. Un tel système permet de ne pas tenir compte des contacts parasites.

Pour détecter le contact et la pression exercée par la pointe sur la surface d'écriture, l'ustensile de ce système de relevé de la trace comporte un premier aimant fixé à la pointe, laquelle est rétractable vis-à-vis du corps de l'ustensile, et un deuxième aimant fixé au corps. Le système détermine la position et/ou l'orientation des deux aimants, en déduit leur écartement relatif, puis détecte le contact de la pointe sur la surface d'écriture lorsque cet écartement est inférieur à une valeur seuil prédéfinie. Cependant, il est nécessaire ici d'utiliser un ustensile particulier comportant au moins deux aimants, lesquels sont associés l'un à l'autre mécaniquement. Il n'est ainsi pas possible d'utiliser un ustensile quelconque.

Le document WO2013/057412 décrit un autre exemple d'un système de relevé de la trace d'un ustensile, ici au moyen d'un capteur matriciel tactile, par exemple de type capacitif ou résistif. Ce capteur matriciel tactile comporte une matrice de pixels distincts formés par l'intersection de lignes conductrices disposées en lignes et colonnes de part et d'autre d'un film. Le contact de la pointe de l'ustensile est détecté à partir de la mesure de l'intensité des signaux électriques émis par les pixels.

Cependant, un tel système présente une résolution associée à la mesure de la position du contact de la pointe qui dépend notamment des dimensions et du pas d'agencement des pixels. De plus, un tel système présente une certaine latence du fait du temps nécessaire à la lecture des pixels de la matrice. Dans ce document, pour diminuer cette latence tout en optimisant la consommation électrique, il est prévu d'effectuer une mesure globale des colonnes, et de n'effectuer une mesure séquentielle des lignes que lorsqu'un contact est détecté sur au moins l'une des colonnes activées. Cela implique de disposer d'une électronique adaptée permettant un tel pilotage de l'activation des pixels. Il existe donc toujours un besoin de limiter la consommation électrique tout en réduisant la latence liée à la lecture des pixels, ceci sans complexifier l'électronique et les liaisons connectiques nécessaires.

Par ailleurs, le document FR2988872A1 décrit un écran d'affichage comportant un dispositif de localisation d'un objet magnétique mobile au moyen d'un réseau de magnétomètres.

### EXPOSÉ DE L'INVENTION

L'invention a pour objectif de remédier au moins en partie aux inconvénients de l'art antérieur. Pour cela, l'objet de l'invention est un système de relevé d'une trace effectuée sur une surface d'écriture tel que défini dans la revendication 1.

Certains aspects préférés mais non limitatifs de ce système de relevé de la trace d'un ustensile sont définis dans les revendications 2 à 9.

L'invention porte également sur un procédé, tel que défini dans la revendication 10, de relevé d'une trace de la pointe d'un ustensile sur une surface d'écriture au moyen du système selon l'une quelconque des revendications 1-9.

L'invention porte également sur un support d'enregistrement d'informations, tel que défini dans la revendication 11, comportant des instructions pour l'exécution d'un procédé de relevé d'une trace selon la revendication 10, lorsque ces instructions sont exécutées par une unité de calcul.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple, et faite en référence aux dessins annexés sur lesquels :
la figure 1 est une vue schématique et partielle, en coupe, d'un système de relevé de la trace effectuée par la pointe d'un ustensile sur la surface d'écriture selon un mode de réalisation ;
la figure 2 est une vue schématique et partielle, en éclaté, du système de relevé de la trace illustré sur la fig.1 ;
la figure 3 est un organigramme illustrant des étapes d'un procédé de relevé de la trace effectuée par la pointe d'un ustensile sur la surface d'écriture, selon un mode de réalisation ;
les figures 4A et 4B sont des vues schématiques et partielles, en perspective, d'un système de relevé de la trace selon un mode de réalisation, pour deux instants de mesure différents.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système et un procédé de relevé de la trace effectuée par la pointe d'un ustensile sur une surface d'écriture. Le système de relevé de la trace comporte d'une manière générale :
- un ustensile muni d'un objet magnétique ;
- un dispositif de localisation, adapté à déterminer la position Pₐ de l'objet magnétique, et éventuellement son orientation, et à déterminer une position estimée de référence Č_{p|c} sur la surface d'écriture ; et
- un capteur matriciel tactile, adapté à détecter le contact de la pointe sur la surface d'écriture, et avantageusement à en mesurer la force d'appui.

Le système de relevé peut également comporter une interface graphique pour afficher la trace ainsi relevée. Il peut trouver une application dans la numérisation d'un dessin ou d'une écriture, voire dans la commande de l'interface graphique (par ex. sélectionner et déplacer un objet numérique affiché par l'interface graphique, etc...). Par relevé de la trace effectuée par la pointe de l'ustensile, on entend la détermination et l'enregistrement des positions successives de la pointe de l'ustensile lorsqu'elle est au contact de la surface d'écriture. Le système de relevé de la trace peut ainsi détecter l'instant initial du premier contact de la pointe sur la surface d'écriture définissant le début de la trace, ainsi que l'instant final correspondant à la rupture de contact et définissant la fin de la trace.

L'ustensile est un objet destiné à être manipulé par un utilisateur, par exemple à la main. Il comporte une structure rigide (corps) réalisée en un matériau de préférence non magnétique, par exemple du plastique, laquelle présente une pointe destinée à venir au contact de la surface d'écriture du système de relevé de trace. Il peut s'agir d'un crayon au sens large, c'est-à-dire un stylo, stylet, feutre, pinceau ou tout autre organe d'écriture ou de dessin. La pointe est une extrémité de l'ustensile, et peut être pointue ou arrondie, rigide ou déformable.

Le capteur matriciel tactile est dit 'tactile' dans la mesure où il est adapté à détecter le contact de la pointe de l'ustensile sur la surface d'écriture. De plus, il est dit 'matriciel' dans la mesure où il comporte une matrice de pixels distincts les uns des autres formée par des pistes conductrices disposées en lignes et colonnes. Chaque pixel est adapté à fournir un signal électrique de réponse représentatif du contact éventuel de la pointe de l'ustensile sur la surface d'écriture. Le capteur matriciel tactile peut être de type capacitif ou de type résistif, par exemple piézorésistif. Plus largement, le capteur matriciel tactile présente un paramètre qui varie localement en fonction du contact de la pointe sur la surface d'écriture, et éventuellement de la force d'appui exercée. Ce paramètre peut être une capacité, une résistance électrique, une tension électrique, etc.

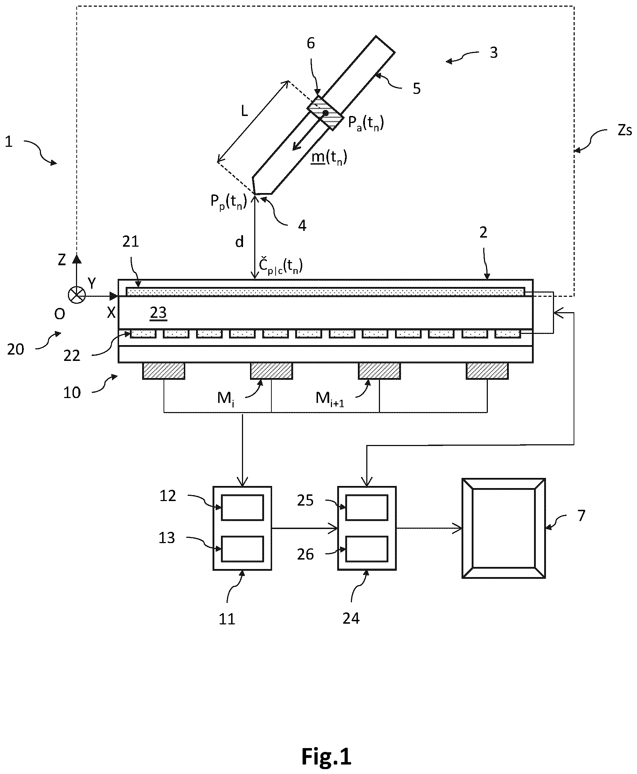

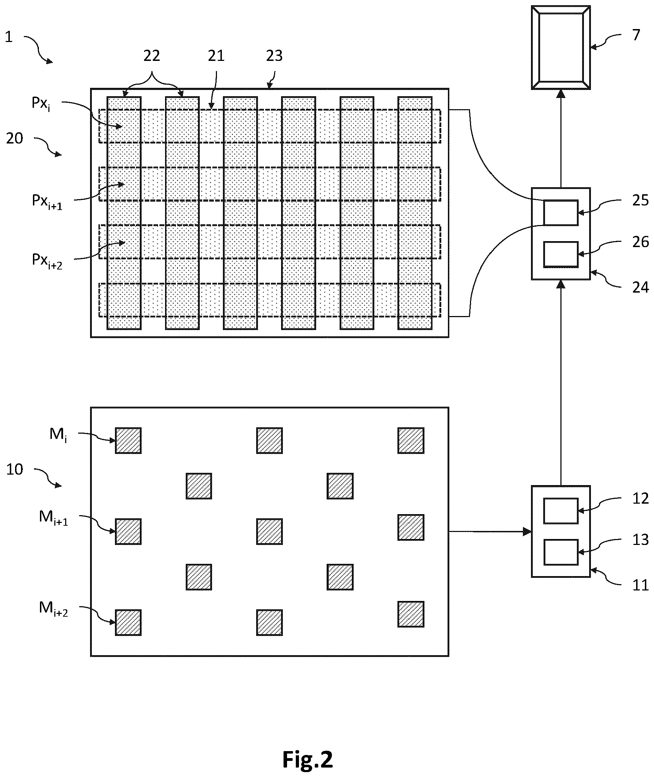

Les figures 1 et 2 sont des vues schématiques et partielles, respectivement en coupe et en vue éclatée, d'un système 1 de relevé de la trace d'un ustensile 3 selon un mode de réalisation. Dans cet exemple, l'ustensile 3 est un stylet dont la pointe 4 est destinée à venir au contact de la surface d'écriture 2. Par ailleurs, le capteur matriciel tactile 20 est un capteur matriciel de pression résistif, qui est alors adapté, outre de détecter le contact de la pointe 4 sur la surface d'écriture 2, d'en mesurer la force d'appui (également appelée force de pression).

La surface d'écriture 2 peut être la surface d'une couche de protection du capteur matriciel tactile 20 décrit en détail plus loin. Il peut également s'agir de la surface d'un élément rapporté et disposé sur une surface d'appui du capteur matriciel tactile 20, cet élément étant adapté à transmettre la force de pression exercée par la pointe 4 du stylet 3 au capteur matriciel tactile 20. Un tel élément peut être, par exemple, une ou plusieurs feuilles de papier.

On définit ici et pour la suite de la description un repère direct tridimensionnel orthogonal OXYZ, où les axes X et Y forment un plan parallèle à la surface d'écriture 2, et où l'axe Z est orienté vers l'ustensile 3. Dans cet exemple, l'origine O est situé en bordure d'une zone de suivi Zs de l'objet magnétique 6, mais elle peut être située ailleurs dans la zone de suivi Zs, par exemple en bordure de la surface d'écriture 2.

L'ustensile 3 est muni d'un objet magnétique 6, ici un aimant permanent, solidaire ici sans degré de liberté de la structure rigide 5 du stylet 3. L'objet magnétique 6 comporte un matériau présentant une aimantation, par exemple rémanente, pour lequel on définit un moment magnétique m. Il peut être un aimant permanent cylindrique, par exemple annulaire, tel qu'illustré dans le document WO2014/053526, voire un électroaimant. Il peut également s'agir d'un transpondeur adapté à réémettre un champ magnétique émis par un réseau de générateurs magnétiques. Cependant, dans cet exemple, l'objet magnétique 6 est un aimant permanent. Dans cet exemple, l'objet magnétique 6 est distinct de la pointe 4 et en est distant d'une distance L non nulle. En variante, il peut être confondu avec la pointe 4.

Le matériau magnétique est de préférence ferrimagnétique ou ferromagnétique. Il présente un moment magnétique spontané non nul même en l'absence d'un champ magnétique extérieur. Il peut présenter un champ magnétique coercitif supérieur à 100 A.m⁻¹ ou 500 A.m⁻¹ et l'intensité du moment magnétique est de préférence supérieure à 0,01 A.m² voire à 0,1 A.m², par exemple égale à 0,2 A.m² environ. On considère que l'objet magnétique 6 peut être approximé par un dipôle magnétique, mais d'autres modèles peuvent être utilisés. L'axe magnétique de l'objet magnétique 6 est défini comme étant l'axe colinéaire au moment magnétique m de l'objet magnétique 6. De préférence, l'axe magnétique est dirigé vers la pointe de l'ustensile.

Comme l'illustre la fig.1, l'aimant 6 peut être disposé à une distance L non nulle de la pointe 4 du stylet 3. Cette distance L est connue et ne varie pas dans le temps. Elle est définie dans un modèle numérique représentatif de l'ustensile 3 utilisé, ce modèle étant enregistré dans une mémoire 13 du dispositif de localisation 10. Aussi, la connaissance de la position et de l'orientation de l'aimant 6 dans le repère OXYZ permet d'en déduire la position Pₚ de la pointe 4 du stylet 3. Dans le cas où l'aimant 6 et la pointe 4 sont confondus, il n'est pas nécessaire de déterminer l'orientation du moment magnétique m de l'aimant 6.

Le stylet 3 est destiné à être manipulé par l'utilisateur dans une zone de suivi Zs. Dans un premier temps, le stylet 3 n'est pas au contact de la surface d'écriture 2, et en est distant d'une valeur d non nulle qui varie dans le temps. Puis l'utilisateur amène le stylet 3 de sorte qu'il y ait contact de la pointe 4 sur la surface d'écriture 2. La distance d est alors nulle et le capteur matriciel tactile 20 détecte le contact et avantageusement la force de pression exercée par la pointe 4. Puis, l'utilisateur déplace la pointe 4 du stylet 3 sur la surface d'écriture 2. Les positions successives de la pointe 4 au contact de la surface d'écriture 2 forment la trace déterminée par le système 1 de relevé de trace.

Le système 1 de relevé de trace comporte également un dispositif de localisation 10, adapté à déterminer un vecteur d'état Xₐ représentatif de la position de l'aimant 6 dans le repère OXYZ, et éventuellement de son orientation, puis de déterminer au moins une position estimée de référence Č_{p|c} sur la surface d'écriture 2. Ainsi, le dispositif de localisation 10 détermine, à différents instants de mesure successifs, une position estimée de référence Č_{p|c} sur la surface d'écriture 2, avant ou pendant le contact sur celle-ci. Cette position estimée de référence Č_{p|c} est de préférence une projection suivant l'axe Z de la position Pₚ de la pointe 4 sur le plan XY de la surface d'écriture 2. Elle est dite estimée dans la mesure où elle est déterminée par le dispositif de localisation 10 et non pas par le capteur matriciel tactile 20.

Par localiser l'aimant 6, on entend déterminer la position de l'aimant 6 dans la zone de suivi Zs sous la forme d'un vecteur d'état Xₐ et éventuellement son orientation. La position Pₐ de l'aimant 6 correspond ici aux coordonnées du centre géométrique de l'aimant 6, c'est-à-dire au barycentre non pondéré de l'ensemble des points de l'aimant 6. Par ailleurs, le moment magnétique m de l'aimant 6 est un vecteur dont les composantes sont (mₓ, m_{y}, m_{z}) dans le repère réel OXYZ. Sa norme, également appelée intensité ou amplitude, est notée ∥m∥ ou m.

L'aimant 6 est destiné à évoluer dans la zone de suivi Zs. Celle-ci est un espace dans lequel le rapport signal sur bruit SNR (pour *Signal to Noise Ratio,* en anglais) d'au moins l'un des magnétomètres du dispositif de localisation 10 est supérieur ou égal à une valeur seuil prédéfinie. A titre d'exemple, la zone de suivi Zs peut être un espace dans lequel le signal, c'est-à-dire la norme ou au moins une composante du champ magnétique généré par l'aimant 6 et mesuré par le magnétomètre correspondant, est supérieure ou égale à, par exemple, 20 fois le bruit. Le bruit associé à chaque magnétomètre peut être égal à 0,2µT environ. Dans ce cas, la zone de suivi Zs correspond à une zone de l'espace dans laquelle le champ magnétique généré par l'aimant 6 et mesuré par au moins l'un des magnétomètres Mᵢ est supérieur ou égal à 6µT environ, ce qui correspond à une distance dₘₐₓ égale à 20cm environ suivant l'axe directeur passant par le magnétomètre Mᵢ considéré. Plus simplement, la zone de suivi Zs peut être définie comme un espace dans lequel chaque point est à une distance inférieure ou égale à une distance maximale dₘₐₓ selon l'axe directeur passant par le magnétomètre Mᵢ le plus proche, celle-ci étant par exemple égale à 20cm, voire à 10cm, ou encore à 5cm.

Le dispositif de localisation 10 est apte à mesurer le champ magnétique ambiant, dont l'une des contributions est le champ magnétique généré par l'aimant 6, à différents instants de mesure, au cours d'une durée T de suivi, dans le repère OXYZ, et ensuite à estimer la position de l'aimant 6, et éventuellement son orientation, sur la base des mesures des magnétomètres Mᵢ.

Pour cela, il comporte un réseau de magnétomètres Mᵢ solidaires ici sans degré de liberté d'une face arrière du capteur matriciel tactile 20. Le nombre de magnétomètres Mᵢ peut être, par exemple supérieur ou égal à 2, de préférence supérieur ou égal à 16, par exemple égal à 25 environ, notamment lorsqu'il s'agit de magnétomètres triaxes. Le réseau de magnétomètres Mᵢ comporte cependant au moins trois axes de mesure distants les uns des autres et non parallèles deux à deux. Les magnétomètres Mᵢ peuvent être alignés lignes et colonnes, ou peuvent être positionnés mutuellement de manière sensiblement aléatoire. Les positions des magnétomètres Mᵢ sont connues. Par exemple, elles peuvent être comprises entre 1cm et 10cm, par exemple 5cm.

Les magnétomètres Mᵢ présentent chacun au moins un axe de mesure, par exemple trois axes, notés xᵢ, yᵢ, zᵢ. Chaque magnétomètre mesure donc l'amplitude et la direction du champ magnétique ambiant Bᵢ dont une contribution est générée par l'aimant 6. Plus précisément, chaque magnétomètre Mᵢ mesure la norme de la projection orthogonale du champ magnétique ambiant Bᵢ suivant les axes xᵢ, yᵢ, zᵢ du magnétomètre. Un paramètre de calibration des magnétomètres Mᵢ peut être le bruit associé aux magnétomètres, ici de l'ordre de 0,2µT. Par champ magnétique ambiant B, on entend le champ magnétique non perturbé par un quelconque élément magnétique, formé notamment d'une contribution terrestre B^{terr} de l'ordre de 50µT, auquel s'ajoute le champ magnétique B^{a} généré par l'aimant 6. D'autres contributions magnétiques peuvent s'ajouter, comme une contribution associée au bruit des capteurs et une contribution liée à une erreur de décalage (*offset,* en anglais), lesquelles sont négligées ici.

Le dispositif de localisation 10 comporte en outre une unité de calcul 11 apte à déterminer à partir des mesures des magnétomètres Mᵢ la position de l'aimant 6 dans le repère OXYZ et éventuellement son orientation, la position et le cas échéant l'orientation définissant un vecteur d'état Xₐ. De plus, l'unité de calcul 11 est apte à déterminer la position Pₚ de la pointe 4 du stylet 3 dans le repère OXYZ. L'unité de calcul 11 est également adaptée à déterminer une position estimée de référence Č_{p|c} sur la surface d'écriture 2, et est connectée à l'unité de traitement 24 du capteur matriciel tactile 20 pour lui transmettre cette position estimée Č_{p|c}. L'unité de calcul 11 comporte les coordonnées de la surface d'écriture 2 dans le repère OXYZ. Ainsi, connaissant la position de la pointe Pₚ et les coordonnées de la surface d'écriture 2 dans le repère OXYZ, elle est en mesure de déterminer la position estimée de référence Č_{p|c} sur la surface d'écriture 2.

Pour cela, chaque magnétomètre Mᵢ est électriquement connecté à l'unité de calcul 11 par un bus de transmission d'informations (non représenté). L'unité de calcul 11 comporte un processeur programmable 12 apte à exécuter des instructions enregistrées sur un support d'enregistrement d'informations. Elle comporte en outre une mémoire 13 contenant les instructions nécessaires pour la mise en oeuvre de la localisation de l'aimant 6, ainsi que le modèle numérique de l'ustensile 3 utilisé, permettant de fournir la position Pₚ de la pointe 4 du stylet 3 dans le repère OXYZ à partir du vecteur d'état Xₐ. La mémoire 13 est également adaptée à stocker les informations calculées à chaque instant de mesure.

L'unité de calcul 11 implémente un modèle mathématique associant la position de l'aimant 6 dans le repère OXYZ, ainsi que, dans cet exemple, l'orientation et l'intensité de son moment magnétique m, aux mesures des magnétomètres Mᵢ. Ce modèle mathématique est construit à partir des équations de l'électromagnétisme, en particulier de la magnétostatique, et est paramétré notamment par les positions et orientations des magnétomètres dans le repère OXYZ. Ici, ce modèle est non linéaire. L'unité de calcul 11 met en oeuvre un algorithme d'estimation de sa solution tel que, par exemple, un filtrage bayésien (par ex. filtre de Kalman étendu) ou une optimisation, voire tout autre algorithme du même type.

De préférence, pour pouvoir approximer l'aimant 6 à un dipôle magnétique, la distance entre l'aimant 6 et chaque magnétomètre Mᵢ est supérieure à 2, voire 3 fois la plus grande dimension de l'aimant 6. Cette dimension peut être inférieure à 20cm, voire inférieure à 10cm, voire à 5cm. L'aimant 6 peut être modélisé par un modèle dipolaire, entre autres, en fonction notamment de la distance entre l'aimant 6 et chaque magnétomètre Mᵢ du réseau.

Le système 1 de relevé de trace comporte un capteur matriciel tactile 20, ici un capteur matriciel de pression. Il est adapté à détecter le contact de la pointe 4 du stylet 3 sur la surface d'écriture 2 à partir ici de la mesure de l'intensité de la force de pression exercée sur cette surface d'écriture 2.

Le capteur matriciel de pression comporte une matrice de pression, formée d'une pluralité de pixels Pxᵢ sensibles à la pression exercée sur sa surface. La matrice de pression est dans cet exemple de type résistif. Un tel capteur est également appelé capteur de force résistif (*Force-Sensing Resistor,* en anglais).

Il est formé d'un film 23 réalisé en un matériau piézorésistif, c'est-à-dire en un matériau dont la résistance électrique locale varie en fonction de la contrainte mécanique exercée, par exemple en un polymère conducteur. Le matériau sensible du film peut être continu dans le plan XY ou peut être pixellisé. Des pistes conductrices 21, 22 sont formées en lignes sur une face du film 23 et en colonnes sur la face opposée. Les pixels Pxᵢ sont formés par l'intersection, en vue de dessus, entre les lignes et les colonnes des pistes conductrices 21, 22. Les pixels Pxᵢ peuvent être accolés les uns aux autres, voire être espacés les uns des autres (comme illustré sur la fig.2).

Le capteur matriciel de pression 20 comporte un nombre N de pixels Pxᵢ, par exemple égal à 2500 environ. Les pistes conductrices 21, 22 peuvent présenter une largeur de quelques millimètres, par exemple 2.5mm, de sorte qu'un pixel présente ici une surface de 2.5×2.5mm². Les pixels Pxᵢ sont distincts et sont espacés dans le plan XY les uns des autres par exemple d'une distance de 1mm environ. Le diamètre de la pointe 4 du stylet 3 au contact de la surface d'écriture 2 peut être ici de l'ordre du millimètre, par exemple compris entre 1mm et 3mm environ.

Le capteur matriciel de pression 20 comporte une unité de traitement 24, comportant un microcontrôleur 25 assurant la commande et la lecture des différents pixels de la matrice de pression, et une unité de calcul 26 adaptée à détecter le contact de la pointe 4 et à déterminer l'intensité de la force de pression exercée, sur la base des signaux électriques de réponse émis par les pixels. Le microcontrôleur 25 est ainsi adapté à transmettre un signal électrique de commande à chacun des pixels, et à recevoir un signal électrique de réponse, celui-ci étant représentatif d'un contact éventuel de la pointe 4 du stylet 3 sur la surface d'écriture 2, et en outre, ici, de l'intensité de la force de pression exercée par le stylet 3. L'unité de traitement 24 comporte les coordonnées des N pixels Pxᵢ dans le repère OXYZ. Ainsi, connaissant la position estimée de référence Č_{p|c} sur la surface d'écriture 2 et les coordonnées des N pixels Pxᵢ dans le repère OXYZ, elle est en mesure de déterminer un ensemble Sₚₓ de M pixels, avec M inférieur à N, qui entourent au moins en partie la position estimée de référence Č_{p|c}. M est de préférence supérieur ou égal à 2.

L'unité de calcul 26, à partir des signaux électriques de réponse reçus, détecte s'il y a contact ou non de la pointe 4 sur la surface d'écriture 2. Pour cela, le signal électrique émis par chaque pixel présente une intensité qui, lorsqu'elle est supérieure à un seuil prédéterminé, correspond au contact de la pointe 4 sur la surface d'écriture 2. L'intensité de la force de pression exercée par la pointe 4 est dépendante de l'intensité des signaux électriques émis par un ou plusieurs pixels.

L'unité de traitement 24 enregistre alors les positions estimées successives de référence Č_{p|c}(tₙ) sur la surface d'écriture 2, déterminées par le dispositif de localisation 10, lorsque le contact a été détecté, qui forment ainsi ou participent à former la trace de l'ustensile 3 sur la surface d'écriture 2. L'intensité de la force de pression exercée permet de fournir une caractéristique supplémentaire de la trace de l'ustensile 3, et peut être utilisée pour faire varier par exemple la largeur de la trace de l'ustensile 3. L'unité de traitement 24 peut être connectée à une interface graphique 7, pour afficher par exemple la trace relevée par le système.

L'unité de traitement 24 peut ainsi comporter un microcontrôleur 25 pour le pilotage de l'alimentation électrique des pixels, associés à des convertisseurs analogique-numérique CAN, et son unité de calcul 26 comporte au moins un processeur et au moins une mémoire contenant les instructions nécessaires pour la mise en oeuvre de la détection du contact de la pointe 4 et de la mesure de la force de pression, et pour stocker les informations calculées à chaque instant de mesure, et ici des convertisseurs. Bien entendu, le processeur et la mémoire de l'unité de calcul 26 peuvent être communs ou non avec ceux du microcontrôleur 25.

Selon l'invention, l'unité de traitement 24 du capteur matriciel tactile 20 est connectée à l'unité de calcul 11 du dispositif de localisation 10, et reçoit de ce dernier les positions estimées de référence successives Č_{p|c}(tₙ) sur la surface d'écriture 2, qu'il y ait ou non contact de la pointe 4 sur la surface d'écriture 2.

De préférence, elle reçoit ces données uniquement lorsque la position P_{p,z} de la pointe 4 suivant l'axe Z est inférieure ou égale à une valeur seuil prédéterminée P_{p,z,th}. Lorsque ce n'est pas le cas, le capteur matriciel tactile 20 peut être inactif, c'est-à-dire non alimenté électriquement totalement ou en partie, de manière à limiter la consommation électrique du système 1 de relevé de trace.

Lorsque la position P_{p,z} est inférieure ou égale à la valeur seuil P_{p,z,th}, l'unité de traitement 24 est activée (alimentée électriquement), reçoit la valeur de la position estimée de référence Č_{p|c} sur la surface d'écriture 2, et détermine un ensemble Sₚₓ de M pixels, avec M inférieur à N, qui entourent au moins en partie la position estimée de référence Č_{p|c}. A titre d'exemple, le nombre N total de pixels peut être égal à 2500 environ, et le nombre M de pixels dudit ensemble Sₚₓ peut être égal à 25 environ, par exemple un carré de 5×5 pixels.

L'unité de traitement 24 effectue alors la mesure uniquement des pixels dudit ensemble Sₚₓ et non pas de tous les pixels de la matrice. Les signaux électriques de commande sont donc transmis uniquement aux M pixels alors que les autres pixels ne sont pas alimentés électriquement. Ensuite, les signaux électriques de réponse sont reçus par l'unité de traitement 24. Ainsi, la latence de commande/lecture des pixels est fortement réduite, dans la mesure où il s'agit de lire ici 25 pixels pour chaque instant de mesure, et non pas 2500 pixels. En conséquence, la consommation électrique est également fortement réduite.

L'unité de traitement 24 est adaptée enfin à déterminer la trace effectuée par le stylet 3 à partir des positions estimées successives de référence Č_{p|c} sur la surface d'écriture 2, et ici à partir de la valeur de la force de pression exercée, puis à commander l'interface graphique 7 pour afficher la trace déterminée. Comme détaillé plus loin, la trace peut être formée par l'ensemble des positions estimées successives Č_{p|c}, mais elle peut également tenir compte des positions successives du contact Č_{p|c} déterminées par le capteur matriciel tactile 20. La précision de la mesure du contact peut alors être améliorée.

Ainsi, le système 1 de relevé de la trace, du fait de la combinaison du dispositif de localisation 10 de l'objet magnétique 6 et le capteur matriciel tactile 20, présente plusieurs avantages. Il est ainsi possible d'utiliser un grand nombre d'ustensiles du commerce, du moment qu'il permet d'y fixer l'objet magnétique 6 tel qu'un aimant. L'ustensile 3 peut d'ailleurs n'être muni que d'un seul aimant 6 à localiser. Il n'est donc pas nécessaire qu'il soit muni de plusieurs aimants, même s'il est possible de prévoir plusieurs aimants solidaires de l'ustensile. On évite ainsi la nécessité d'utiliser un ustensile 3 dédié et complexe, comme dans le document EP2811383. Il n'est pas non plus nécessaire d'intégrer un capteur de pression dans l'ustensile.

Par ailleurs, le contact de la pointe 4 est détecté avec précision par le capteur matriciel tactile 20, et la position de la pointe 4 sur la surface d'écriture 2 est déterminée avec une résolution élevée par le dispositif de localisation 10. La position de la pointe 4 n'est ainsi pas impactée par la résolution potentiellement faible des capteurs matriciels tactiles classiques, laquelle dépend des dimensions et de l'agencement des pistes conductrices 21, 22. De plus, la détermination de la position estimée de référence Č_{p|c} sur la surface d'écriture 2 n'est pas perturbée par les contacts parasites éventuels, tels que le contact du doigt ou celui de la paume de la main de l'utilisateur sur la surface d'écriture 2.

Par ailleurs, le système 1 de relevé de la trace présente une latence liée à la commande/lecture de la matrice de pixels particulièrement réduite, dans la mesure où seuls les M pixels sélectionnés de l'ensemble Sₚₓ sont activés par le microcontrôleur 25, et non pas les N pixels de la matrice. La fréquence de commande/lecture peut alors être particulièrement élevée. En conséquence, la consommation électrique du système 1 de relevé de la trace est diminuée. De plus, il est avantageux que le capteur matriciel tactile 20 reste au moins en partie inactif lors du suivi de l'objet magnétique 6 par le dispositif de localisation 10, notamment lorsque la position P_{p,z} de la pointe 4 suivant l'axe Z est supérieur à la valeur seuil P_{p,z,th}.

Par ailleurs, il est possible d'utiliser un capteur matriciel tactile 20 dont le microcontrôleur 25 et les connectiques électriques sont simples et classiques. On évite ainsi d'avoir à utiliser un microcontrôleur 25 et des connectiques particulières liés à la nécessité d'activer les lignes et/ou les colonnes de manière soit individuelle et séquentielle, soit collective, tel que décrit dans le document WO2013/057412.

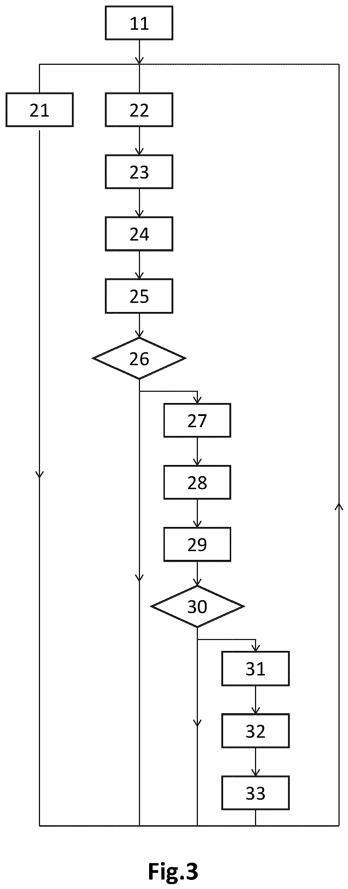

La figure 3 est un organigramme illustrant un procédé de relevé de la trace de l'ustensile 3 selon un mode de réalisation. Dans cet exemple, le système 1 de relevé de la trace est identique à celui décrit en référence aux fig. 1 et 2. Il commande l'interface graphique 7 pour afficher la trace ainsi relevée.

Lors d'une première étape 11, on enregistre un modèle numérique du stylet 3 dans la mémoire 13 de l'unité de calcul 11 du dispositif de localisation 10. Comme mentionné précédemment, ce modèle numérique permet de déduire la position Pₚ de la pointe 4 dans le repère OXYZ à partir du vecteur d'état Xₐ de l'aimant 6. Cette étape 11 peut également comporter une phase d'enregistrement des coordonnées dans le repère OXYZ de la surface d'écriture 2, ainsi qu'une phase d'enregistrement des coordonnées dans le repère OXYZ des N pixels Pxᵢ du capteur matriciel tactile 20.

Lors d'une étape 21, l'utilisateur manipule le stylet 3 dans la zone de suivi Zs, c'est-à-dire qu'il en modifie la position et éventuellement l'orientation dans le repère OXYZ. Dans un premier temps, la pointe 4 du stylet 3 n'est pas au contact de la surface d'écriture 2 et présente une position P_{p,z} suivant l'axe Z supérieure à la valeur seuil P_{p,z,th}. Dans un deuxième temps, la pointe 4 présente une position P_{p,z} inférieure ou égale à la valeur seuil P_{p,z,th} mais n'est toujours pas au contact de la surface d'écriture 2. Enfin, dans un troisième temps, elle vient au contact de la surface d'écriture 2 et la position de la pointe 4 sur la surface d'écriture 2 est enregistrée et forme la trace relevée et affichée.

Les étapes 22 à 33 sont effectuées de manière itérative à un instant de mesure tₙ, le temps étant discrétisé à une fréquence d'échantillonnage déterminée, par exemple 140Hz. A chaque itération de rang n est associé un instant de mesure tₙ, également appelé instant courant.

Lors d'une étape 22, les magnétomètres mesurent le champ magnétique ambiant à l'instant courant, et notamment la contribution du champ magnétique ambiant générée par l'aimant 6 solidaire du stylet 3.

Lors d'une étape 23, l'unité de calcul 11 reçoit les mesures du champ magnétique ambiant, en déduit la contribution du champ magnétique généré par l'aimant 6, et détermine le vecteur d'état Xₐ(tₙ) associé à l'aimant 6 à l'instant courant tₙ dans le repère OXYZ. Le vecteur d'état Xₐ(tₙ) comporte la position de l'aimant 6 dans le repère OXYZ, et également, dans cet exemple, son orientation. Cette estimation du vecteur d'état peut être effectuée à l'aide d'un algorithme d'estimation de la position et de l'orientation de l'aimant 6 de type bayésien, par exemple un filtre de Kalman étendu, ou à l'aide d'une méthode d'optimisation (descente de gradient...), ou à l'aide de tout autre algorithme du même type. Un exemple d'estimation d'un vecteur d'état associé à un aimant 6 est notamment décrit dans la demande WO2018/219891.

Lors d'une étape 24, l'unité de calcul 11 détermine la position Pₚ(tₙ) de la pointe 4 du stylet 3, à partir du vecteur d'état Xₐ(tₙ) et du modèle numérique du stylet 3. La position Pₚ(tₙ) de la pointe 4 comporte la composante P_{p,z}(tₙ) suivant l'axe Z et la composante P_{p,xy}(tₙ) dans le plan XY parallèle à la surface d'écriture 2. Dans le cas où l'objet magnétique 6 est confondu avec la pointe 4, la position Pₚ(tₙ) de la pointe 4 est identique à la position Pₐ(tₙ).

Lors d'une étape 25, l'unité de calcul 11 détermine la position estimée de référence Č_{p|c}(tₙ) sur la surface d'écriture 2, à partir du vecteur d'état Xₐ(tₙ) et des coordonnées de la surface d'écriture 2 dans le repère OXYZ. Cette position estimée de référence Č_{p|c} peut être égale à la projection suivant l'axe Z de la position P_{p,xy}(tₙ) de la pointe 4 dans le plan XY, auquel cas il y a égalité entre Č_{p|c}(tₙ) et P_{p,xy}(tₙ).

Lors d'une étape 26, la valeur de la position P_{p,z}(tₙ) de la pointe 4 suivant l'axe Z est comparée à la valeur seuil prédéfinie P_{p,z,th}. Lorsque la position P_{p,z}(tₙ) est supérieure à la valeur seuil P_{p,z,th}, le dispositif de localisation 10 continue de mesurer le champ magnétique (étape 22 et suivantes). Le capteur matriciel tactile 20 reste avantageusement désactivé, c'est-à-dire qu'il n'est pas alimenté électriquement, de manière à limiter la consommation électrique du système 1 de relevé de trace. Si le dispositif de localisation 10 est directement connecté à l'interface graphique 7, la pointe 4 peut être représentée et affichée sur l'interface graphique 7, sans qu'une trace ne soit affichée. Lorsque la position P_{p,z}(tₙ) est inférieure ou égale à la valeur seuil P_{p,z,th}, le procédé continue avec l'étape 27.

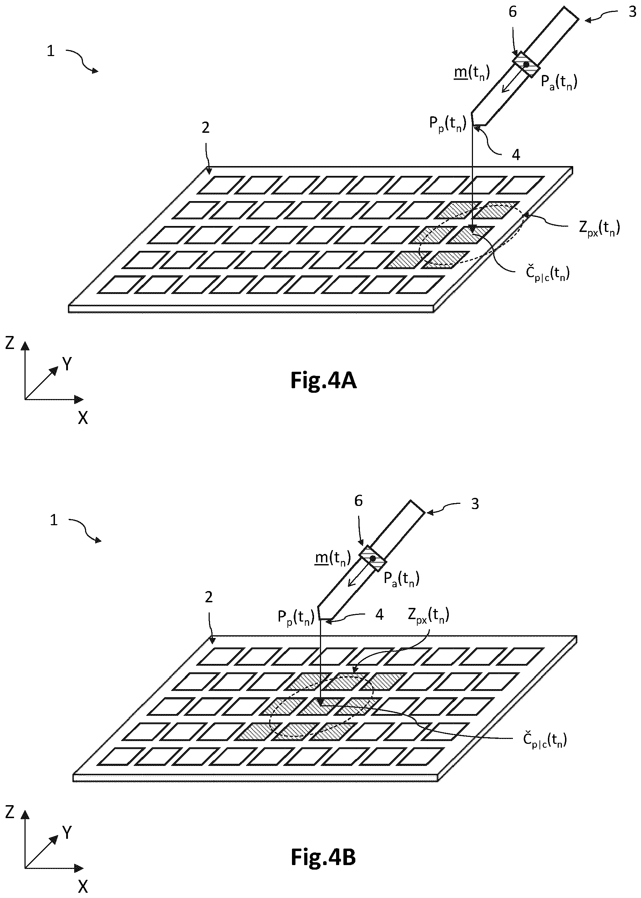

Lors d'une étape 27, le capteur matriciel tactile 20 est activé (le cas échéant), et la valeur de la position estimée de référence Č_{p|c}(tₙ) sur la surface d'écriture 2 est transmise à l'unité de traitement 24 du capteur matriciel tactile 20. Celle-ci détermine alors un ensemble Sₚₓ(tₙ) de pixels de la matrice de pression qui entourent au moins en partie la position estimée de référence Č_{p|c}(tₙ). Pour cela, les coordonnées de chaque pixel Pxᵢ dans le repère OXYZ sont enregistrées dans la mémoire de l'unité de traitement 24. L'unité de traitement 24 détermine une zone Zₚₓ(tₙ) de sélection de pixels centrée sur la position estimée de référence Č_{p|c}(tₙ) et présentant un contour prédéfini, par exemple un cercle, ovale, carré, rectangle.... A ce titre, les figures 4A et 4B illustrent le système 1 de relevé de trace à deux instants de mesure distincts, et montrent la zone Zₚₓ(tₙ) centrée sur la position estimée de référence Č_{p|c}(tₙ). Dans cet exemple, l'ensemble Sₚₓ(tₙ) comporte les pixels dont la surface est au moins en partie située à l'intérieur de cette zone Zₚₓ(tₙ) de sélection de pixels. Cet ensemble Sₚₓ(tₙ) est redéfini à chaque instant de mesure tₙ.

Par ailleurs, le capteur matriciel tactile 20 peut avoir été initialisé en mesurant le « bruit de fond » associé à la matrice de pixels en l'absence d'un contact quelconque (pointe du stylet, doigt, paume...) sur la surface d'écriture 2. Cette mesure initiale est ensuite systématiquement soustraite aux mesures des signaux électriques de réponse des pixels de l'ensemble Sₚₓ(tₙ), permettant ainsi de supprimer les éventuelles dérives temporelles et/ou des erreurs de décalage (*offset,* en anglais).

Lors d'une étape 28, le microcontrôleur 25 de l'unité de traitement 24 active uniquement les M pixels de l'ensemble Sₚₓ(tₙ), et garde inactifs les autres pixels non sélectionnés (c'est-à-dire non alimentés électriquement). Il transmet donc un signal électrique de commande aux pixels de l'ensemble Sₚₓ(tₙ) et reçoit leurs signaux électriques de réponse.

Lors d'une étape 29, l'unité de traitement 24 détermine la valeur d'un paramètre κ(tₙ) représentatif du contact de la pointe 4 sur la surface d'écriture 2. Ce paramètre peut être l'intensité du signal électrique de réponse d'au moins un des pixels de l'ensemble Sₚₓ(tₙ), voire l'intensité moyenne, pondérée ou non, des signaux électriques de réponse des pixels de l'ensemble Sₚₓ(tₙ). Il peut s'agir de la résistance électrique d'au moins l'un des pixels de l'ensemble Sₚₓ(tₙ), ou tout autre paramètre équivalent.

Lors d'une étape 30, l'unité de traitement 24 compare la valeur du paramètre κ(tₙ) à une valeur seuil prédéfinie κₜₕ et détecte le contact de la pointe 4 sur la surface d'écriture 2 comme étant effectif lorsque la valeur du paramètre κ(tₙ) est supérieure ou égale à la valeur seuil κₜₕ. La valeur seuil κₜₕ permet de filtrer les fluctuations liées au bruit de mesure. Lorsque ce n'est pas le cas, le procédé de relevé de la trace continue avec la mesure du champ magnétique (étape 22 et suivantes), et lorsque le contact est détecté, le procédé continue avec l'étape 31.

Lors d'une étape 31, dans la mesure où le contact de la pointe 4 sur la surface d'écriture 2 est détecté par le capteur matriciel tactile 20, l'unité de traitement 24 enregistre la position estimée de référence Č_{p|c}(tₙ) fournie par le dispositif de localisation 10. Les positions estimées de référence successives Č_{p|c}(tₙ) enregistrées par l'unité de traitement 24 forment ou participent à former le relevé de la trace effectuée par le stylet 3.

En variante, la position de la pointe 4 au contact de la surface d'écriture 2, telle qu'enregistrée par l'unité de traitement 24, peut dépendre à la fois de la position estimée de référence Č_{p|c}(tₙ) fournie par le dispositif de localisation 10, et d'une position Č_{p|c}(tₙ) fournie par le capteur matriciel tactile 20. Ainsi, la position Č_{p|c}(tₙ) peut correspondre à la position du centroïde (barycentre pondéré) des efforts de pression exercés par la pointe 4 sur la surface d'écriture 2, et mesurés par les pixels de l'ensemble Sₚₓ(tₙ). La position de la pointe 4 enregistrée par l'unité de traitement 24 peut être la moyenne, pondérée ou non, des positions Č_{p|c}(tₙ) et C_{p|c}(tₙ).

Lors d'une étape 32, lorsque le capteur matriciel tactile 20 est adapté à mesurer la force de pression, c'est-à-dire qu'il comporte une matrice de pression, l'unité de traitement 24 mesure la force de pression appliquée par la pointe 4 sur la surface d'écriture 2. De manière connue, la force de pression est déterminée à partir de l'intensité des signaux électriques de réponse émis par les pixels de l'ensemble Sₚₓ(tₙ). La force de pression, à l'instant courant tₙ, permet par exemple de modifier une caractéristique de la trace, par exemple la largeur du trait affiché sur l'interface graphique 7.

Lors d'une étape 33, l'unité de traitement 24 construit la trace à partir des positions successives de la pointe 4 enregistrées, et ici en tenant compte de la force de pression appliquée par la pointe 4 sur la surface d'écriture 2. Elle commande ensuite l'affichage de la trace ainsi relevée sur l'interface graphique 7.

Les étapes 22 à 33 sont réitérées à la fréquence d'échantillonnage définie, laquelle peut être constante ou non dans le temps, et qui peut notamment dépendre de la vitesse de déplacement de l'aimant 6 ou de la pointe 4, calculée par le dispositif de localisation 10 à partir du vecteur d'état Xₐ(tₙ). En particulier, la fréquence d'échantillonnage associée à la localisation de l'aimant 6 (par ex. 140 Hz) peut être identique ou différente de la fréquence de commande/lecture des pixels de l'ensemble Sₚₓ(tₙ).

Les figures 4A et 4B sont des vues en perspective de l'ustensile 3 manipulé par un utilisateur au-dessus de la surface d'écriture 2 du capteur matriciel tactile 20, pour deux instants différents.

Dans ces deux exemples, la pointe 4 présente une position P_{p,z}(tₙ) de la pointe 4 suivant l'axe Z inférieure à la valeur seuil P_{p,z,th}, de sorte que le capteur matriciel tactile 20 est activé et que la position estimée de référence Č_{p|c}(tₙ) sur la surface d'écriture 2 lui est transmise. Il détermine alors une zone de sélection Zₚₓ(tₙ) en forme de cercle centrée sur la valeur Č_{p|c}(tₙ).

Dans l'exemple de la fig.4A, le stylet 3 est positionné en bordure de la surface d'écriture 2. La zone de sélection Zₚₓ(tₙ) s'étend alors à cheval dans la surface d'écriture 2 et en-dehors de celle-ci. Un pixel est entièrement situé dans la zone de sélection Zₚₓ(tₙ), et est entouré par 5 pixels adjacents situés partiellement dans la zone de sélection Zₚₓ(tₙ). Ainsi, l'ensemble Sₚₓ(tₙ) comporte les 6 pixels situés au moins en partie dans la zone de sélection Zₚₓ(tₙ). Les pixels sélectionnés entourent ainsi au moins en partie la position estimée de référence Č_{p|c}(tₙ) sur la surface d'écriture 2.

Dans l'exemple de la fig.4B, le stylet 3 est positionné au centre de la surface d'écriture 2. La zone de sélection Zₚₓ(tₙ) s'étend alors entièrement dans la surface d'écriture 2. Dans cet exemple, un seul pixel est entièrement situé dans la zone de sélection Zₚₓ(tₙ), et est entouré par 8 pixels adjacents situés partiellement dans la zone de sélection. Ainsi, l'ensemble Sₚₓ comporte les 9 pixels situés au moins en partie dans la zone de sélection Zₚₓ(tₙ). Les pixels sélectionnés entourent ainsi au moins en partie la position estimée de référence Č_{p|c} sur la surface d'écriture 2.

Bien entendu, la zone de sélection Zₚₓ(tₙ) peut présenter d'autres formes. A titre d'exemple, elle peut présenter une forme allongée, le grand axe étant alors orienté suivant la direction de déplacement de la pointe 4, laquelle est déterminée par le dispositif de localisation 10 à partir du vecteur d'état Xₐ(tₙ). La dimension du grand axe peut également dépendre de la vitesse de déplacement de la pointe ou de l'aimant, cette vitesse de déplacement étant déterminée par l'unité de calcul 11 à partir du vecteur d'état Xₐ estimé pour plusieurs instants de mesure, et étant transmise à l'unité de traitement 24. Par ailleurs, la forme et/ou la taille de la zone de sélection Zₚₓ(tₙ) peuvent dépendre du type d'ustensile 3 utilisé, et éventuellement des caractéristiques de la pointe 4.

Des modes de réalisation particuliers viennent d'être décrits. Différentes variantes et modifications apparaîtront à l'homme du métier.

Ainsi, le système de relevé de la trace 1 peut comporter plusieurs ustensiles 3 munis chacun d'au moins un objet magnétique 6, destinés à venir contacter une même surface d'écriture 2. Le dispositif de localisation 10 peut ainsi déterminer un vecteur d'état pour chacun des objets magnétiques 6, et le capteur matriciel tactile 20 peut déterminer le contact de la pointe 4 de chacun des ustensiles 3.

## Revendications

1. Système (1) de relevé d'une trace effectuée sur une surface d'écriture (2), comportant :
∘ un ustensile (3), destiné à être manipulé par un utilisateur, muni d'un objet magnétique (6), et comportant une pointe (4) destinée à venir au contact de la surface d'écriture (2) pour former la trace à relever ;
∘ un dispositif de localisation (10), comportant :
• un réseau de magnétomètres (Mᵢ), solidaires de la surface d'écriture (2), et adaptés à mesurer un champ magnétique émis par l'objet magnétique (6) à différents instants de mesure successifs tₙ,
• une unité de calcul électronique (11), adaptée à déterminer un vecteur d'état Xₐ représentatif d'au moins une position de l'objet magnétique (6) à partir du champ magnétique mesuré, et à déterminer une position estimée de référence Č_{p|c} sur la surface d'écriture (2) à partir du vecteur d'état Xₐ,
∘ **caractérisé en ce qu'**il comporte un capteur matriciel tactile (20) comportant :
• une matrice de N pixels distincts (Pxᵢ), solidaires de la surface d'écriture (2), et adaptés chacun à fournir un signal électrique de réponse représentatif d'un contact de la pointe (4) sur la surface d'écriture (2) ;
• une unité de traitement électronique (24), connectée à l'unité de calcul électronique (11), et adaptée à déterminer un ensemble Sₚₓ de M pixels, avec M inférieur à N, entourant au moins en partie ladite position estimée de référence Č_{p|c},
à transmettre un signal électrique de commande aux M pixels dudit ensemble Sₚₓ et recevoir leurs signaux électriques de réponse ; et à détecter le contact de la pointe (4) sur la surface d'écriture (2) à partir des signaux électriques de réponse issus dudit ensemble Sₚₓ des M pixels, et lorsque le contact est détecté, à enregistrer des positions successives de la pointe (4) pour former le relevé de la trace en fonction d'au moins les positions estimées de référence successives Č_{p|c}.

2. Système (1) selon la revendication 1, dans lequel le dispositif de localisation (10) est adapté à déterminer une position P_{p,z} de la pointe (4) suivant un axe orthogonal à la surface d'écriture (2) à partir du vecteur d'état Xₐ, à comparer la position P_{p,z} déterminée à une valeur seuil prédéfinie P_{p,z,th}, et à transmettre la position estimée de référence Č_{p|c} au capteur matriciel tactile (20) lorsque la position P_{p,z} est inférieure ou égale à la valeur seuil prédéfinie P_{p,z,th}.

3. Système (1) selon la revendication 1 ou 2, dans lequel le dispositif de localisation (10) est adapté à déterminer la position P_{p,z} de la pointe (4) suivant 1' axe orthogonal à la surface d'écriture (2) à partir du vecteur d'état Xₐ, à comparer la position P_{p,z} déterminée à une valeur seuil prédéfinie P_{p,z,th}, et à activer le capteur matriciel tactile (20) lorsque la position P_{p,z} est inférieure ou égale à la valeur seuil prédéfinie P_{p,z,th}, le capteur matriciel tactile (20) restant non alimenté électriquement dans le cas contraire.

4. Système (1) selon l'une quelconque des revendications 1 à 3, dans lequel la position estimée de référence Č_{p|c} est déterminée par projection suivant l' axe orthogonal à la surface d'écriture (2) de la position P_{p,xy} de la pointe (4) dans un plan parallèle à la surface d'écriture (2).

5. Système (1) selon l'une quelconque des revendications 1 à 4, dans lequel le dispositif de localisation (10) est adapté à calculer une vitesse de déplacement de l'objet magnétique (6) à partir du vecteur d'état Xₐ déterminé pour plusieurs instants de mesure, à transmettre la vitesse de déplacement à l'unité de traitement (24), celle-ci étant adaptée à définir l'ensemble Sₚₓ de M pixels avec un contour allongé suivant un grand axe, le grand axe étant parallèle à l'axe de la vitesse de déplacement.

6. Système (1) selon la revendication 5, dans lequel le grand axe présente une longueur qui dépend de la norme de la vitesse de déplacement.

7. Système (1) selon l'une quelconque des revendications 1 à 6, dans lequel le capteur matriciel tactile (20) est un capteur matriciel de pression adapté à déterminer une force de pression exercée par la pointe (4) sur la surface d'écriture (2).

8. Système (1) selon la revendication 7, dans lequel le capteur matriciel tactile (20) est adapté à déterminer une position Č_{p|c} du point de contact de la pointe (4) sur la surface d'écriture (2), la position de la pointe (4) enregistrée pour former la trace est fonction de la position estimée de référence Č_{p|c} et de la position Č_{p|c} du point de contact de la pointe (4).

9. Système (1) selon l'une quelconque des revendications 1 à 8, dans lequel le vecteur d'état Xₐ est déterminé par un algorithme d'estimation bayésien ou par une méthode d'optimisation.

10. Procédé de relevé d'une trace de la pointe (4) d'un ustensile (3) sur une surface d'écriture (2) au moyen du système selon l'une quelconque des revendications précédentes, comportant les étapes suivantes :
∘ manipulation par un utilisateur de l'ustensile (3), celui-ci n'étant tout d'abord pas au contact de la surface d'écriture (2) puis venant au contact de la surface d'écriture (2) ;
∘ mesure, par le réseau de magnétomètres (Mᵢ), du champ magnétique émis par l'objet magnétique (6) à différents instants de mesure successifs tₙ ;
∘ détermination, par l'unité de calcul électronique (11), du vecteur d'état Xₐ(tₙ) de l'objet magnétique (6), à partir des mesures du champ magnétique mesuré ;
∘ détermination, par l'unité de calcul électronique (11), de la position estimée de référence Č_{p|c}(tₙ) sur la surface d'écriture (2), à partir du vecteur d'état Xₐ(tₙ) déterminé ;
∘ **caractérisé en ce qu'**il comporte en outre les étapes suivantes :
∘ détermination, par l'unité de traitement électronique (24), de l'ensemble Sₚₓ(tₙ) de M pixels (Pxi) entourant au moins en partie la position estimée de référence Č_{p|c}(tₙ) ;
∘ transmission, par l'unité de traitement électronique (24), du signal électrique de commande aux pixels de l'ensemble Sₚₓ(tₙ), et réception des signaux électriques de réponse ;
∘ détection, par l'unité de traitement électronique (24), du contact de la pointe (4) sur la surface d'écriture (2), à partir des signaux électriques de réponse issus dudit ensemble Sₚₓ des M pixels, et lorsque le contact est détecté, enregistrement des positions successives de la pointe (4) pour former le relevé de la trace en fonction d'au moins les positions estimées de référence successives Č_{p|c}(tₙ).

11. Support d'enregistrement d'informations, comportant des instructions pour l'exécution d'un procédé de relevé d'une trace selon la revendication 10, lorsque ces instructions sont exécutées par une unité de calcul.

## Patentansprüche

1. System (1) zum Erfassen einer Spur, die auf einer Schreibfläche (2) ausgeführt wird, enthaltend:
∘ ein Gerät (3), das dazu vorgesehen ist, durch einen Benutzer gehandhabt zu werden, und mit einem magnetischen Gegenstand (6) ausgestattet ist, und eine Spitze (4) enthaltend, die dazu vorgesehen ist, mit der Schreibfläche (2) in Kontakt zu kommen, um die zu erfassende Spur zu bilden;
∘ eine Ortungsvorrichtung (10), enthaltend:
• ein Netzwerk von Magnetometern (Mᵢ), die mit der Schreibfläche (2) fest verbunden sind, und angepasst sind, um das Magnetfeld zu messen, das durch den magnetischen Gegenstand (6) zu verschiedenen aufeinanderfolgenden Messzeitpunkten tₙ emittiert wird,
• eine elektronische Recheneinheit (11), die angepasst ist, um einen Zustandsvektor Xₐ zu bestimmen, der für mindestens eine Position des magnetischen Gegenstands (6) ausgehend vom gemessenen Magnetfeld repräsentativ ist, und um eine geschätzte Referenzposition Č_{p|c} auf der Schreibfläche (2) ausgehend vom Zustandsvektor Xₐ zu bestimmen,
∘ **dadurch gekennzeichnet, dass** es einen taktilen Matrixsensor (20), enthält, enthaltend:
• eine Matrix von N unterschiedlichen Pixeln (Pxᵢ), die mit der Schreibfläche (2) fest verbunden sind, und jeweils angepasst sind, um ein elektrisches Antwortsignal zu liefern, das für einen Kontakt der Spitze (4) auf der Schreibfläche (2) repräsentativ ist;
• eine elektronische Verarbeitungseinheit (24), die mit der elektronischen Recheneinheit (11) verbunden ist, und angepasst ist, um eine Anordnung Sₚₓ von M Pixeln zu bestimmen, mit M kleiner als N, die die geschätzte Referenzposition Č_{p|c} mindestens teilweise umgibt, um ein elektrisches Steuersignal an die M Pixel der Anordnung Sₚₓ zu übertragen und ihre elektrischen Antwortsignale zu empfangen; und um den Kontakt der Spitze (4) auf der Schreibfläche (2) ausgehend von den elektrischen Antwortsignalen, die von der Anordnung Sₚₓ der M Pixel ausgegangen sind, zu detektieren, und, wenn der Kontakt detektiert wurde, um die aufeinanderfolgenden Positionen der Spitze (4) aufzuzeichnen, um die Erfassung der Spur in Abhängigkeit von mindestens den geschätzten aufeinanderfolgenden Referenzpositionen Č_{p|c} zu bilden.

2. System (1) nach Anspruch 1, wobei die Ortungsvorrichtung (10) angepasst ist, um eine Position P_{p,z} der Spitze (4) entlang einer Achse orthogonal zur Schreibfläche (2) ausgehend vom Zustandsvektor Xₐ zu bestimmen, um die bestimmte Position P_{p,z} mit einem vordefinierten Schwellenwert P_{p,z,th} zu vergleichen, und um die geschätzte Referenzposition Č_{p|c} an den taktilen Matrixsensor (20) zu übertragen, wenn die Position P_{p,z} kleiner oder gleich dem vordefinierten Schwellenwert P_{p,z,th} ist.

3. System (1) nach Anspruch 1 oder 2, wobei die Ortungsvorrichtung (10) angepasst ist, um die Position P_{p,z} der Spitze (4) entlang der Achse orthogonal zur Schreibfläche (2) ausgehend vom Zustandsvektor Xₐ zu bestimmen, um die bestimmte Position P_{p,z} mit einem vordefinierten Schwellenwert P_{p,z,th} zu vergleichen und den taktilen Matrixsensor (20) zu aktivieren, wenn die Position P_{p,z} kleiner oder gleich dem vordefinierten Schwellenwert P_{p,z,th} ist, wobei im umgekehrten Fall der taktile Matrixsensor (20) nicht elektrisch versorgt wird.

4. System (1) nach einem der Ansprüche 1 bis 3, wobei die geschätzte Referenzposition Č_{p|c} durch Projektion entlang der Achse orthogonal zur Schreibfläche (2) der Position P_{p,xy} der Spitze (4) in einer Ebene parallel zur Schreibfläche (2) bestimmt wird.

5. System (1) nach einem der Ansprüche 1 bis 4, wobei die Ortungsvorrichtung (10) angepasst ist, um eine Geschwindigkeit der Bewegung des magnetischen Gegenstands (6) ausgehend vom bestimmten Zustandsvektor Xₐ für mehrere Messzeitpunkte zu berechnen, und um die Geschwindigkeit der Bewegung an die Verarbeitungseinheit (24) zu übertragen, wobei diese angepasst ist, um die Anordnung Sₚₓ von M Pixeln mit einer länglichen Kontur entlang einer Hauptachse zu definieren, wobei die Hauptachse parallel zur Achse der Geschwindigkeit der Bewegung ist.

6. System (1) nach Anspruch 5, wobei die Hauptachse eine Länge aufweist, die von der Norm der Geschwindigkeit der Bewegung abhängt.

7. System (1) nach einem der Ansprüche 1 bis 6, wobei der taktile Matrixsensor (20) ein Druck-Matrixsensor ist, der angepasst ist, um eine Druckkraft zu bestimmen, die von der Spitze (4) auf die Schreibfläche (2) ausgeübt wird.

8. System (1) nach Anspruch 7, wobei der taktile Matrixsensor (20) angepasst ist, um eine Position Č_{p|c} des Punkts des Kontakts der Spitze (4) auf der Schreibfläche (2) zu bestimmen, wobei die Position der Spitze (4), die aufgezeichnet wird, um die Spur zu bilden, von der geschätzten Referenzposition Č_{p|c} und der Position Č_{p|c} des Punkts des Kontakts der Spitze (4) abhängt.

9. System (1) nach einem der Ansprüche 1 bis 8, wobei der Zustandsvektor Xₐ durch einen bayesschen Schätzungsalgorithmus oder durch eine Optimierungsmethode bestimmt wird.

10. Verfahren zum Erfassen einer Spur der Spitze (4) eines Geräts (3) auf einer Schreibfläche (2) mittels des Systems nach einem der vorhergehenden Ansprüche, die folgenden Schritte enthaltend:
∘ Handhabung des Geräts (3) durch einen Benutzer, wobei dieses zunächst nicht in Kontakt mit der Schreibfläche (2) ist und dann in Kontakt mit der Schreibfläche (2) kommt;
∘ Messung, durch das Netzwerk von Magnetometern (Mᵢ), des Magnetfelds, das durch den magnetischen Gegenstand (6) zu verschiedenen aufeinanderfolgenden Messzeitpunkten tₙ emittiert wird;
∘ Bestimmung, durch die elektronische Recheneinheit (11), des Zustandsvektors Xₐ(tₙ) des magnetischen Gegenstands (6) ausgehend von den Messungen des gemessenen Magnetfelds;
∘ Bestimmung, durch die elektronische Recheneinheit (11), der geschätzten Referenzposition Č_{p|c}(tₙ) auf der Schreibfläche (2) ausgehend vom bestimmten Zustandsvektor Xₐ(tₙ);
∘ **dadurch gekennzeichnet, dass** es ferner die folgenden Schritte enthält:
∘ Bestimmung, durch die elektronische Verarbeitungseinheit (24), der Anordnung Sₚₓ(tₙ) von M Pixeln (Pxᵢ), die die geschätzte Referenzposition Č_{p|c}(tₙ) mindestens teilweise umgibt;
∘ Übertragung, durch die elektronische Verarbeitungseinheit (24), des elektrischen Steuersignals an die Pixel der Anordnung Sₚₓ(tₙ), und Empfang der elektrischen Antwortsignale;
∘ Detektion, durch die elektronische Verarbeitungseinheit (24), des Kontakts der Spitze (4) auf der Schreibfläche (2) ausgehend von den elektrischen Antwortsignalen, die von der Anordnung Sₚₓ der M Pixel ausgegangen sind, und, wenn der Kontakt detektiert wurde, Aufzeichnung der aufeinanderfolgenden Positionen der Spitze (4), um die Erfassung der Spur in Abhängigkeit von mindestens den geschätzten aufeinanderfolgenden Referenzpositionen Č_{p|c}(tₙ) zu bilden.

11. Informationsaufzeichnungsmedium, das Anweisungen zum Ausführen eines Verfahrens zum Erfassen einer Spur nach Anspruch 10 enthält, wenn diese Anweisungen von einer Recheneinheit ausgeführt werden.

## Claims

1. A system (1) for recording a trace performed on a writing surface (2), including:
∘ a utensil (3), intended to be handled by a user, provided with a magnetic object (6), and including a tip (4) intended to come into contact with the writing surface (2) to form the trace to be recorded;
∘ a localisation device (10), including:
• a network of magnetometers (Mᵢ), which are secured to the writing surface (2), and adapted to measure a magnetic field emitted by the magnetic object (6) at different successive measurement times tₙ,
• an electronic calculation unit (11), adapted to determine a state vector Xₐ representative of at least one position of the magnetic object (6) from the measured magnetic field, and to determine an estimated reference position *Č*_{p|c} on the writing surface (2) from the state vector Xₐ,
∘ **characterised in that** it includes a touch matrix sensor (20) including:
• a matrix of N distinct pixels (Pxᵢ), which are secured to the writing surface (2), and each adapted to provide an electrical response signal representative of a contact of the tip (4) on the writing surface (2);
• an electronic processing unit (24), connected to the electronic calculation unit (11), and adapted to determine a set Sₚₓ of M pixels, with M less than N, at least partly surrounding said estimated reference position Č_{p|c}, to transmit an electrical control signal to the M pixels of said set Sₚₓ and receive their electrical response signals; and to detect the contact of the tip (4) on the writing surface (2) from the electrical response signals from said set Sₚₓ of M pixels, and when the contact is detected, to save successive positions of the tip (4) to form the trace record depending on at least the successive estimated reference positions *Č*_{p|c}.

2. The system (1) according to claim 1, wherein the localisation device (10) is adapted to determine a position P_{p,z} of the tip (4) along an axis orthogonal to the writing surface (2) from the state vector Xₐ, to compare the determined position P_{p,z} with a predefined threshold value P_{p,z,th}, and to transmit the estimated reference position Ĉ_{p|c} to the touch matrix sensor (20) when the position P_{p,z} is less than or equal to the predefined threshold value P_{p,z,th}.

3. The system (1) according to claim 1 or 2, wherein the localisation device (10) is adapted to determine the position P_{p,z} of the tip (4) along the axis orthogonal to the writing surface (2) from the state vector Xₐ, to compare the determined position P_{p,z} with a predefined threshold value P_{p,z,th} and to activate the touch matrix sensor (20) when the position P_{p,z} is less than or equal to the predefined threshold value P_{p,z,th}, the touch matrix sensor (20) remaining not electrically powered otherwise.

4. The system (1) according to any one of claims 1 to 3, wherein the estimated reference position Ĉ_{p|c} is determined by projection along the axis orthogonal to the writing surface (2) of the position P_{p,xy} of the tip (4) in a plane parallel to the writing surface (2).

5. The system (1) according to any one of claims 1 to 4, wherein the localisation device (10) is adapted to calculate a displacement speed of the magnetic object (6) from the state vector Xₐ determined for several measurement times, to transmit the displacement speed to the processing unit (24), the latter being adapted to define the set Sₚₓ of M pixels with an elongated contour along a major axis, the major axis being parallel to the axis of the displacement speed.

6. The system (1) according to claim 5, wherein the major axis has a length which depends on the norm of the displacement speed.

7. The system (1) according to any one of claims 1 to 6, wherein the touch matrix sensor (20) is a pressure matrix sensor adapted to determine a pressure force exerted by the tip (4) on the writing surface (2).

8. The system (1) according to claim 7, wherein the touch matrix sensor (20) is adapted to determine a position *C*_{p|c}, of the point of contact of the tip (4) on the writing surface (2), the position of the tip (4) save to form the trace is a function of the estimated reference position *Č*_{p|c} and of the position *C*_{p|c}, of the point of contact of the tip (4).

9. The system (1) according to any one of claims 1 to 8, wherein the state vector Xₐ is determined by a Bayesian estimation algorithm or by an optimisation method.

10. A method for recording a trace of the tip (4) of a utensil (3) on a writing surface (2) by means of the system according to any one of the preceding claims, including the following steps:
∘ handling the utensil (3) by a user, said utensil first not being in contact with the writing surface (2) then, coming into contact with the writing surface (2);
∘ measuring, by the network of magnetometers (Mᵢ), the magnetic field emitted by the magnetic object (6) at different successive measurement times tₙ;
∘ determining, by the electronic calculation unit (11), the state vector Xₐ(tₙ) of the magnetic object (6), from the measurements of the measured magnetic field;
∘ determining, by the electronic calculation unit (11), the estimated reference position Ĉ_{p|c}(tₙ) on the writing surface (2), from the determined state vector Xₐ(tₙ);
∘ **characterised in that** it further includes the following steps:
∘ determining, by the electronic processing unit (24), the set Sₚₓ(tₙ) of M pixels (Pxᵢ) at least partly surrounding the estimated reference position *Č*_{p|c}(tₙ);
∘ transmitting, by the electronic processing unit (24), the electrical control signal to the pixels of the set Sₚₓ(tₙ), and receiving the electrical response signals;
∘ detecting, by the electronic processing unit (24), the contact of the tip (4) on the writing surface (2), from the electrical response signals from said set Sₚₓ of the M pixels, and when the contact is detected, recording the successive positions of the tip (4) to form the trace record depending on at least the successive estimated reference positions *Č*_{p|c}(tₙ).

11. An information recording medium, including instructions for executing a method for recording a trace according to claim 10, when these instructions are executed by a calculation unit.
